# EUROPEAN PATENT SPECIFICATION

(11) **EP 4 366 065 B1**
(45) Date of publication and mention of the grant of the patent: **02.12.2026**
(21) Application number: 23844163.8
(22) Date of filing: 10.07.2023
(51) Int. Cl.: H01M 50/367, H01M 50/20, H01M 50/50, H01M 50/204, H01M 50/211, H01M 50/271, H01M 50/289, H01M 50/296, H01M 50/474

(54) **BATTERY MODULE, BATTERY PACK AND VEHICLE**
BATTERIEMODUL, BATTERIEPACK UND FAHRZEUG
MODULE DE BATTERIE, BLOC-BATTERIE ET VÉHICULE

(30) Priority: 10.08.2022 KR 20220099862
(43) Date of publication of application: 08.05.2024
(73) Proprietor: LG ENERGY SOLUTION, LTD., Seoul 07335 (KR)
(72) Inventor: RHIM, So-Eun, Yuseong-gu, Daejeon 34122 (KR); JEON, Bo-Ra, Yuseong-gu, Daejeon 34122 (KR); JANG, Byung-Do, Yuseong-gu, Daejeon 34122 (KR); LEE, Hyoung-Suk, Yuseong-gu, Daejeon 34122 (KR)
(74) Representative: Plasseraud IP
(86) International application number: PCT/KR2023/009794
(87) International publication number: WO 2024/034875

(56) References cited:
- EP-A1- 3 910 699
- CN-A- 110 444 835
- JP-B2- 6 821 391
- JP-U- S5 550 518
- KR-A- 20210 044 534
- KR-A- 20210 127 316
- KR-A- 20220 017 383
- KR-B1- 101 750 382
- US-A1- 2022 181 740

## Description

### TECHNICAL FIELD

The present disclosure relates to a battery module, a battery pack, and a vehicle, and, more specifically, relates to a battery module having a plurality of battery cells capable of being charged and discharged, and a battery pack and a vehicle including such a battery module.

### BACKGROUND ART

In general, secondary batteries refer to batteries capable of being repeatedly charged and discharged, such as lithium-ion batteries, lithium polymer batteries, nickel-cadmium batteries, nickel-hydrogen batteries, nickel-zinc batteries, and the like. The output voltage of a battery cell, which is a basic secondary battery, is approximately 2.5V to 4.2V.

Recently, secondary batteries have been applied to devices that require high output voltage and a large amount of charging capacity, such as electric vehicles or ESSs (Energy Storage Systems), and accordingly, a battery module configured by connecting a plurality of battery cells in series, parallel, or a combination thereof and a battery pack configured by reconnecting the battery modules in series, parallel, or a combination thereof have been widely used.

However, as disclosed in Korean Patent Publication No. 10-2022-0052183, according to the existing technology, the battery module is manufactured by simply storing a plurality of battery cells stacked in one direction inside a battery module case, so there is a problem in which the venting direction of gas generated from the battery cells is unable to be controlled.

Moreover, in the existing technology, if thermal runaway occurs in any one battery cell among the multiple battery cells, heat transfers to other battery cells or other battery modules within a short period of time, resulting in chain thermal runaway or ignition of other battery cells or other battery modules.

Document JP S55 50518 U discloses a battery module comprising a cover preventing acid mist from moving from one battery compartment to the next.

Document CN 110 444 835 A discloses a battery pack comprising a cover and dividers configured to form venting paths for gasses along the sides of the pack.

### DISCLOSURE

### Technical Problem

The present disclosure is designed to solve the problems of the related art, and therefore the present disclosure is directed to providing a battery module that controls the gas from battery cells accommodated in the battery module to be vented in an intended direction, and a battery pack and a vehicle including this battery module.

The present disclosure is also directed to providing a battery module, when thermal runaway occurs in a battery cell, capable of delaying the heat transfer and preventing chain thermal runaway or ignition in other battery cells or other battery modules, and a battery pack and a vehicle including this battery module.

### Technical Solution

To solve this problem, the invention provides a battery module according to claim 1. The battery module after the invention may present one or more features of dependent claims 2 to 7, in any combination allowed by the claims.

The invention also provides a battery pack according to claim 8.

The invention further provides a vehicle according to claim 9.

### Advantageous Effects

According to the present disclosure, since a venting structure that covers an opening of a module case is configured to divide a plurality of battery cells accommodated in the internal space of the module case into a plurality of cell groups each including at least one battery cell and provide independent gas venting passage to each cell group, it is possible to control the gases generated from the battery cells to be vented in an intended direction and, if thermal runaway occurs in any one of the plurality of cell groups, delay the heat transfer time to other cell groups and prevent chain thermal runaway or ignition of other cell groups or other battery modules.

In addition, since a first venting structure included in the venting structure is coupled to the module case and configured to cover the opening of the module case and divide the plurality of battery cells into a plurality of cell groups, and since a second venting structure included in the venting structure is coupled to the first venting structure and configured to form a plurality of gas venting passages respectively corresponding to the plurality of cell groups, it is possible to simplify the manufacturing process of battery modules, which have independent gas venting passages for each cell group, and reduce the manufacturing time and manufacturing costs of battery modules.

In addition, each of the plurality of gas venting passages is configured to provide a gas movement path in a zigzag or meander shape, so that heat energy of high-temperature gas or flame moving through the gas venting passage can be appropriately dispersed and the flame can be prevented from being discharged outside the battery module.

Furthermore, those skilled in the art to which the present disclosure pertains will be able to clearly understand from the following description that various embodiments according to the present disclosure are able to solve various technical problems not mentioned above.

### DESCRIPTION OF DRAWINGS

FIG. 1 is a perspective view illustrating a battery module according to an embodiment of the present disclosure.
FIG. 2 is an exploded perspective view illustrating the battery module shown in FIG. 1.
FIG. 3 is a perspective view illustrating a module case of a battery module according to an embodiment of the present disclosure.
FIG. 4 is a perspective view illustrating a first venting structure of a battery module according to an embodiment of the present disclosure.
FIG. 5 is a bottom perspective view illustrating a second venting structure of a battery module according to an embodiment of the present disclosure.
FIG. 6 is a bottom perspective view illustrating a second venting structure according to a modified embodiment of the present disclosure.
FIG. 7 is a cross-sectional view taken along line A-A' of the battery module shown in FIG. 1.
FIG. 8 is a diagram illustrating a battery pack according to an embodiment of the present disclosure.
FIG. 9 is a diagram illustrating a vehicle according to an embodiment of present disclosure.

### BEST MODE

Hereinafter, preferred embodiments of the present disclosure will be described in detail with reference to the accompanying drawings in order to clarify solutions to the technical problems of the present disclosure. However, in describing the present disclosure, a description of related known technology, which may obscure the subject matter of the present disclosure, may be omitted. In addition, the terms used in this specification are defined in consideration of the functions in the present disclosure and may vary depending on the intention of the designer, manufacturer, etc. or custom thereof. Therefore, definitions of the terms described below should be made based on the description throughout this specification.

Meanwhile, the same reference numerals indicate the same components in the attached drawings. In addition, the components of the present disclosure or parts of each component shown in the attached drawings may be exaggerated, reduced, or simplified in order to effectively explain the technical features of the present disclosure.

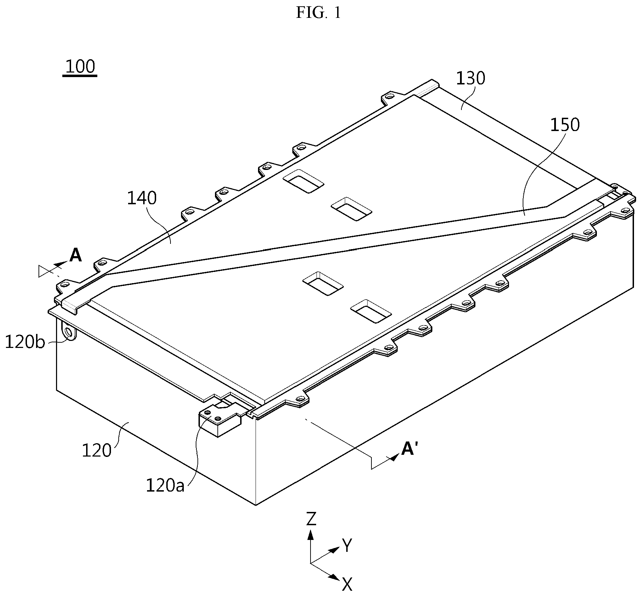

FIG. 1 is a perspective view illustrating a battery module 100 according to an embodiment of the present disclosure.

As shown in FIG. 1, a battery module 100 according to an embodiment of present disclosure may include a module case 120 that accommodates a plurality of battery cells and venting structures 130 and 140 that cover an opening of the module case 120. Depending on the embodiment, the battery module 100 may further include an extension member 150.

The module case 120 may have an internal space and an opening leading to the internal space, and may be configured to accommodate a plurality of battery cells in the internal space. In addition, the module case 120 may be provided with terminals 120a and 120b that are electrically connected to the battery cells accommodated in the internal space.

The venting structures 130 and 140 cover the opening of the module case 120 and are configured to divide a plurality of battery cells accommodated in the internal space of the module case 120 into a plurality of cell groups, each including at least one battery cell, and provide an independent gas venting passage to each cell group.

As described above, since an independent gas venting passage is provided to each cell group in order to vent gas from the plurality of cell groups, it is possible to control the gas generated from the battery cells to be vented in an intended direction and, if thermal runaway occurs in any one of the plurality of cell groups, delay the heat transfer to other cell groups and prevent sequential thermal runaway or ignition of other cell groups or other battery modules.

As will be explained again below, the venting structures 130 and 140 include a first venting structure 130 and a second venting structure 140 that form a plurality of gas venting passages respectively corresponding to the plurality of cell groups by coupling therebetween. As described above, the plurality of gas venting passages formed by coupling of the first venting structure 130 and the second venting structure 140 may be configured independently of each other to block gas movement between the gas venting passages.

The extension member 150 may be configured to change the electrical connection position of the battery module 100. To this end, the extension member 150 may be made of a conductive material. In addition, the extension member 150 may be configured to extend along one surface of the battery module 100 such that one end thereof is electrically connected to the terminal 120b located at one end of the battery module 100 and such that the other end thereof is disposed at the other end of the battery module 100. In this case, the other end of the extension member 150 may be electrically connected to another battery module or an external electric circuit.

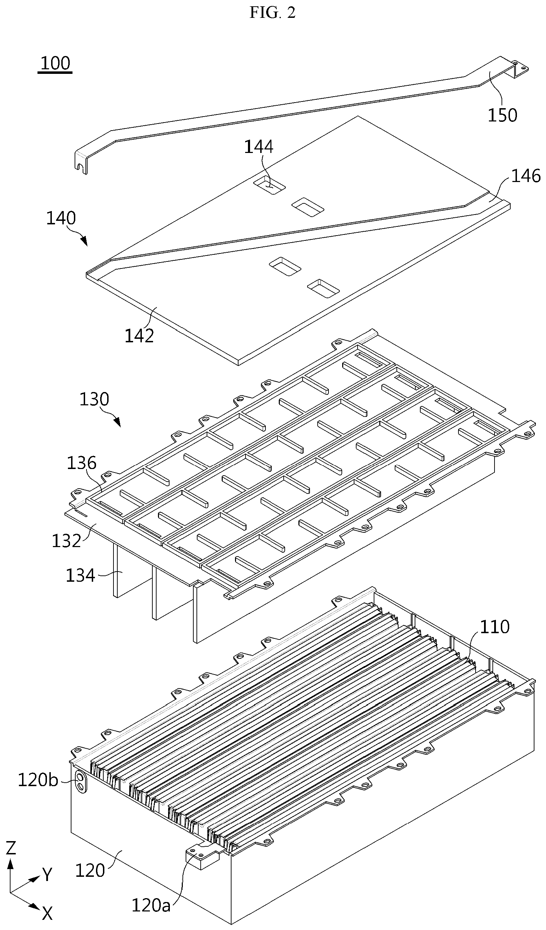

FIG. 2 is an exploded perspective view illustrating the battery module 100 shown in FIG. 1.

As shown in FIG. 2, the module case 120 of the battery module 100 may accommodate two or more battery cells 110 inside its internal space. Additionally, at least some of the battery cells accommodated in the module case 120 may be stacked in the thickness direction (X-axis direction) of the battery cells. In this case, the battery cells may include pouch-type battery cells.

As describe above, the battery cells accommodated in the module case 120 may be electrically connected to the terminals 120a and 120b provided in the module case 120.

The venting structures 130 and 140 are configured to divide the battery cells accommodated in the internal space of the module case 120 into a plurality of cell groups, each including at least one battery cell, and provide an independent gas venting passage to each cell group. To this end, the venting structures 130 and 140 include a first venting structure 130 and a second venting structure 140.

The first venting structure 130 is configured to cover the opening of the module case 120 and divide the battery cells accommodated in the module case 120 into a plurality of cell groups. To this end, the first venting structure 130 includes a first plate 132 and blocking walls 134, and may further include a partition structure 136 depending on the embodiment.

The first plate 132 may be configured to be coupled to edge portions of the module case 120 defining the opening shape of the module case 120, thereby covering the opening of the module case 120.

The blocking walls 134 are configured to extend from the bottom surface of the first plate 132 adjacent to the internal space of the module case 120 toward the internal space, divide a plurality of battery cells accommodated in the internal space into a plurality of cell groups, and block gas movement between the cell groups.

To this end, the blocking wall 134 may have a height and a length corresponding to the height and the length of the internal space, respectively. In addition, the blocking wall 134 may be made of a flame-retardant material. For example, the blocking wall 134 may be made of a material containing aluminum.

In an embodiment, the first venting structure 130 may be integrally formed. That is, the first plate 132 and the blocking walls 134 of the first venting structure 130 may be formed integrally with each other.

In another embodiment, the first plate 132 and the blocking walls 134 of the first venting structure 130 may be provided separately. In this case, the blocking wall 134 may be configured to be inserted between battery cells and then coupled to the first plate 132 covering the top of the battery cells. In another embodiment, the blocking wall 134 may be configured to be coupled to the first plate 132 and then inserted between the battery cells. Various coupling methods such as an adhesive method, a fitting method using a groove structure and a protrusion structure, a fastening method using screws or bolts, and the like may be applied to the coupling between the first plate 132 and the blocking wall 134.

The first venting structure 130 may include one or more blocking walls 134 described above. For example, as shown in FIG. 2, the first venting structure 130 may include three blocking walls to divide the battery cells accommodated in the module case 120 into four groups.

The partition structure 136 may be configured to protrude upwards from the upper surface of the first plate 132 and come into close contact with the second venting structure 140 to form a plurality of gas venting passages. Depending on the embodiment, the first plate 132 and the partition structure 136 may be formed integrally with each other.

The second venting structure 140 is configured to be coupled to the first venting structure 130 so as to form, together with the first venting structure 130, a plurality of gas venting passages corresponding to the plurality of cell groups. To this end, the second venting structure 140 may include a second plate 142 that is coupled to the first venting structure 130 and faces the upper surface of the first venting structure 130.

The second plate 142 may include a plurality of gas outlets 144 corresponding to the plurality of gas venting passages. In this case, each gas outlet 144 may be configured to be connected to a corresponding gas venting passage so as to vent the gas flowing through the corresponding gas venting passage to the outside.

As describe above, the first venting structure 130 and the second venting structure 140 may be coupled to each other to form a plurality of gas venting passages respectively corresponding to the plurality of cell groups, thereby simplifying the manufacturing process of battery modules, which have independent gas venting passages for the respective cell groups, and reducing the manufacturing time and manufacturing costs of battery modules.

Meanwhile, the second venting structure 140 may have a seating groove 146 into which the extension member 150 is inserted while being seated thereon. As described above, the extension member 150 may be configured to change the electrical connection position of the battery module 100. That is, the extension member 150 may extend along the upper surface of the second venting structure 140 such that one end thereof is electrically connected to the terminal 120b located at one end of the module case 120 and such that the other end thereof is disposed at the other end of the module case 120. In this case, the other end of the extension member 150 may be electrically connected to another battery module or an external electric circuit.

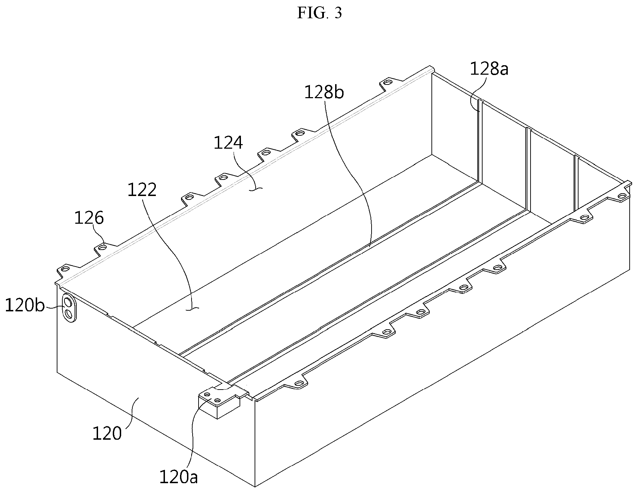

FIG. 3 is a perspective view illustrating a module case 100 of a battery module according to an embodiment of the present disclosure.

As shown in FIG. 3, the module case 120 may include an internal space 122 and an opening 124 leading to the internal space 122. A plurality of battery cells may be accommodated in the internal space 122. In addition, the module case 120 may be provided with terminals 120a and 120b that are electrically connected to the battery cells accommodated in the internal space.

A coupling structure 126 configured to be coupled to the first venting structure 130 may be provided on the edge portions of the module case 120 defining the shape of the opening 124.

According to the invention, a guide groove 128a is provided on the inner surface of the module case 120 into which both edge portions of the blocking wall 134 are inserted while being guided. In this case, the number of guide grooves 128a provided on the inner surface of the module case 120 may vary depending on the number of blocking walls 134 provided in the first venting structure 130.

Additionally, an insertion groove 128b may be provided on the bottom surface of the module case 120 into which at least the lower end of the blocking wall 134 is inserted while being in close contact therewith. In this case, the number of insertion grooves 128b provided on the bottom surface of the module case 120 may vary depending on the number of blocking walls 134 provided in the first venting structure 130.

In an embodiment, a sealing material (not shown) may be placed or applied on the inner surface of at least one of the guide groove 128a and the insertion groove 128b. In this case, the sealing material may be made of synthetic resin with airtightness and heat resistance.

As describe above, the guide groove 128a and the insertion groove 128b into which the edge portions of the blocking wall 134 are inserted are provided on the inner surface of the module case 120, thereby effectively blocking gas movement between the cell groups divided by the blocking walls 134.

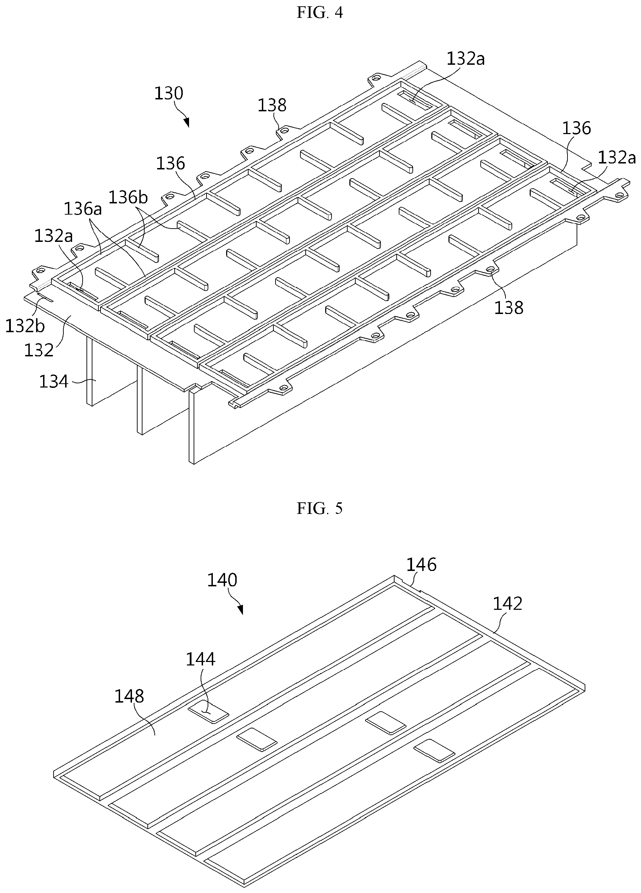

FIG. 4 is a perspective view illustrating a first venting structure 130 of a battery module according to an embodiment of the present disclosure.

As shown in FIG. 4, the first venting structure 130 may be configured to cover the opening of the module case 120 and divide the battery cells accommodated in the module case 120 into a plurality of cell groups. To this end, the first venting structure 130 may include a first plate 132 and a blocking wall 134.

The first plate 132 may be configured to be coupled to edge portions of the module case 120 defining the opening shape of the module case 120, thereby covering the opening.

In addition, the first plate 132 may be provided with a plurality of gas inlets 132a corresponding to the plurality of cell groups. In this case, each gas inlet 132a may be configured to be provided at a position adjacent to a corresponding cell group among the plurality of cell groups and connected to one gas venting passage among the plurality of gas venting passages.

In an embodiment, a through hole 132b may be provided in an edge area located outside the area where the plurality of gas venting passages is formed, among the entire area of the first plate 132. This through hole 132b may be configured to allow one end of the extension member 150 to pass therethrough.

In an embodiment, a coupling structure 138 may be provided in an edge area located outside the area where the plurality of gas venting passages is formed, among the entire area of the first plate 132. This coupling structure 138 may be configured to be coupled to the edge portion of the module case 120 that forms the opening of the module case 120. For example, the coupling structure 138 may be configured to be coupled to the coupling structure 126 of the module case 120 by a fastening member such as a bolt or rivet.

The blocking wall 134 may be configured to extend from the bottom surface of the first plate 132 adjacent to the internal space of the module case 120 toward the internal space, divide a plurality of battery cells accommodated in the internal space into a plurality of cell groups, and block gas movement between the cell groups.

This blocking wall 134 may be made of a flame-retardant material. For example, the blocking wall 134 may be made of a material containing aluminum.

Depending on the embodiment, the blocking wall 134 described above may be formed integrally with the first plate 132.

In addition, the first venting structure 130 may include one or more blocking walls 134. In an embodiment, fire pads made of fire-resistant material may be disposed on both sides of each blocking wall 134.

The partition structure 136 may be configured to protrude upwards from the upper surface of the first plate 132 and come into close contact with the bottom surface of the second venting structure 140, thereby forming a plurality of independent gas venting passages.

In this case, each of the plurality of gas venting passages may be configured to provide a gas movement path in a zigzag or meander shape. To this end, the partition structure 136 may include main partitions 136a and sub-partitions 136b.

The main partitions 136b may be configured to form the overall outline of each gas venting passage. The sub-partitions 136b may be disposed to be distributed inside each gas venting passage and may be configured to form a gas movement path in a zigzag or meander shape.

Depending on the embodiment, the above-described partition structure 136 may be formed integrally with the first plate 132.

FIG. 5 is a bottom perspective view illustrating a second venting structure 140 of a battery module according to an embodiment of the present disclosure.

As shown in FIG. 5, the second venting structure 140 may be configured to be coupled to the first venting structure 130 so as to form, together with the first venting structure 130, a plurality of gas venting passages corresponding to the plurality of cell groups. To this end, the second venting structure 140 may include a second plate 142 that is coupled to the first venting structure 130 and faces the upper surface of the first venting structure 130.

The second plate 142 may be provided with gas outlets 144 for venting the gas flowing through the gas venting passages to the outside. The number of gas outlets 144 provided in the second plate 142 may correspond to the number of gas venting passages formed by coupling of the first venting structure 130 and the second venting structure 140.

In addition, as described with reference to FIG. 2, a seating groove 146 into which the extension member 150 is inserted while being seated thereon may be provided on the upper surface of the second plate 142.

In an embodiment, the second plate 142 may have an insertion groove 148 configured to allow at least a portion of the partition structure 136 provided in the first venting structure 130 to be inserted so as to come into close contact therewith. In this case, the insertion groove 148 may have a shape corresponding to the main partitions 136a of the partition structure 136, which form the outline of the gas venting passage.

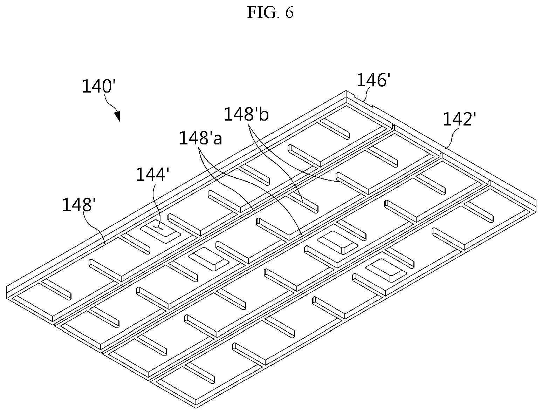

FIG. 6 is a bottom perspective view illustrating a second venting structure 140' according to a modified embodiment of the present disclosure.

As shown in FIG. 6, the second venting structure 140' may include a second plate 142', a gas outlet 144', and a seating groove 146'.

The second plate 142', the gas outlet 144', and the seating groove 146' of the second venting structure 140' may be described in the same manner as the plate 142, the gas outlet 144, and the seating groove 146 of the second venting structure 140 described with reference to FIG. 5.

In particular, the second venting structure 140 may include a partition structure 148'. The partition structure 148' may be configured to protrude from the bottom surface of the second plate 142' and come into close contact with the first plate 132 of the first venting structure 130 to form a plurality of gas venting passages corresponding to the plurality of cell groups.

In this case, each of the plurality of gas venting passages may be configured to provide a gas movement path in a zigzag or meander shape. To this end, the partition structure 148' may include main partitions 148'a and sub-partitions 148'b.

The main partitions 148'a may be configured to form the overall outline of each gas venting passage. The sub-partitions 148'b may be disposed to be distributed inside each gas venting passage and may be configured to form a gas movement path in a zigzag or meander shape.

Depending on the embodiment, the above-described partition structure 148' may be formed integrally with the second plate 142'.

In the case where this second venting structure 140' is applied to the battery module 100, the partition structure 136 of the first venting structure 130 described with reference to FIGS. 2 and 4 may be configured to be mirror-symmetrical with the partition structure 148' of the second venting structure 140', or may be omitted.

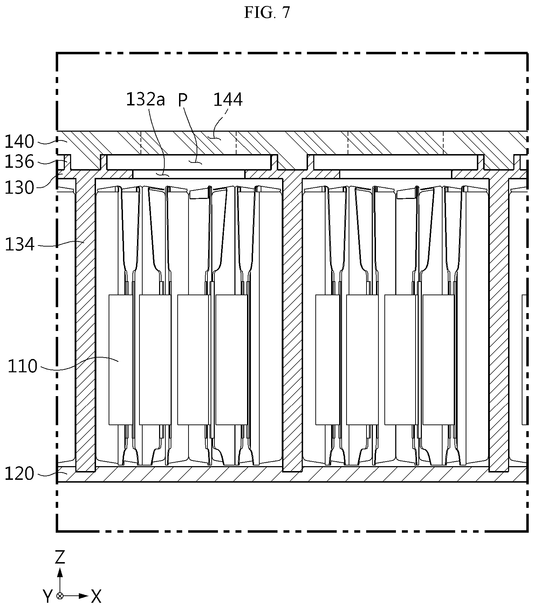

FIG. 7 is a cross-sectional view taken along line A-A' of the battery module shown in FIG. 1.

As shown in FIG. 7, the battery cell 110 may be stacked with other battery cells in one direction (X-axis direction) and accommodated in the module case 120. The battery cells accommodated in the module case 120 may be divided into a plurality of cell groups, each including at least one battery cell, by the blocking walls 134 of the first venting structure 130.

Gas generated from each cell group divided as describe above may be vented to the outside of the battery module 100 through a gas venting passage P provided to each cell group. For example, when gas is generated in the battery cells 110 of a specific cell group among the plurality of cell groups, the gas may flow into the gas venting passage P corresponding to the specific cell group through the gas inlet 132a provided in the first venting structure 130. The gas flowing into the gas venting passage P may move along the path in a zigzag or meander shape, which is provided by the partition structure 136, and vent to the outside through the gas outlet 144 of the second venting structure 140.

As describe above, since the gas generated from each cell group moves only in the Y-axis and Z-axis directions through the gas venting passage P corresponding to the corresponding cell group, instead of moving in the stacking direction (X-axis direction) of battery cells, to be vented, it is possible to delay heat transfer to other cell groups and prevent chain thermal runaway or ignition of other cell groups or other battery modules.

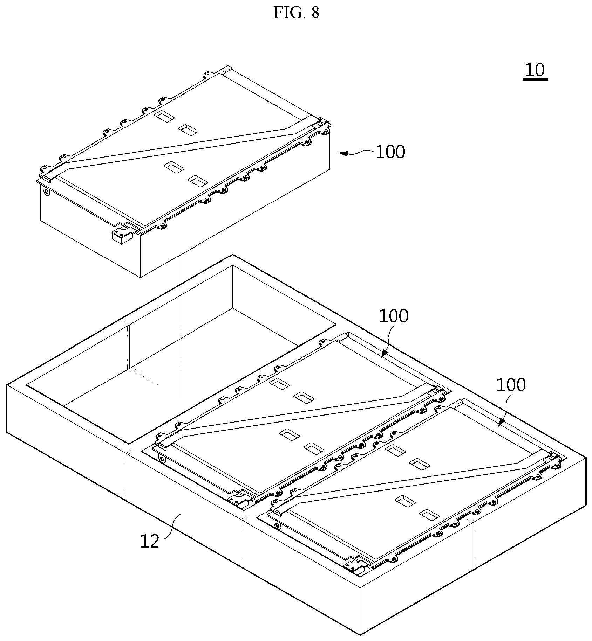

FIG. 8 is a diagram illustrating a battery pack 10 according to an embodiment of the present disclosure.

As shown in FIG. 8, a battery pack 10 according to an embodiment of the present disclosure may include a battery module 100 according to the present disclosure and a pack case 12 that accommodates one or more of the battery modules 100. In this case, the pack case 12 may have a plurality of seating spaces to accommodate a plurality of battery modules to be seated thereon.

In addition, the battery pack 10 may further include various electrical components (not shown) that controls the charging/discharging operation of the battery module 100 accommodated in the pack case 12 or the battery cells 110 included in the battery module 100, or monitors SOC (state of charge), SOH (state of health), and the like. These electronic components may be accommodated in the pack case 12 together with the battery module 100.

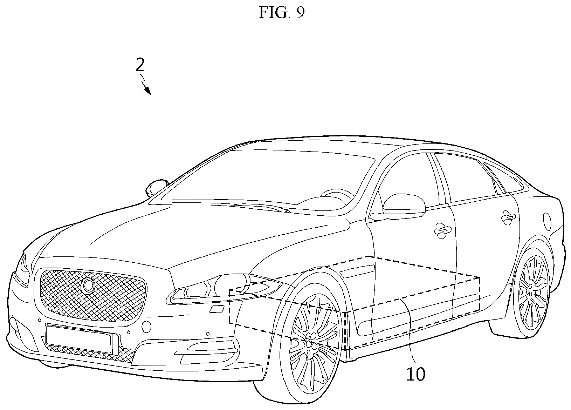

FIG. 9 is a diagram illustrating a vehicle 2 according to an embodiment of present disclosure.

As shown in FIG. 9, a vehicle 2 according to an embodiment of the present disclosure includes one or more battery modules 100 according to the present disclosure. In this case, the vehicle 2 may include a battery pack 10 including one or more battery modules 100 according to the present disclosure, as described with reference to FIG. 8.

As describe above, the battery pack 10 provided in the vehicle 2 may provide electrical energy required for various operations of the vehicle 2.

For reference, the battery module 100 according to the present disclosure may be applied to ESSs (Energy Storage Systems), as well as battery packs used in various electric devices or electric systems in addition to vehicles.

As described above, according to the present disclosure, since a venting structure that covers the opening of the module case is configured to divide a plurality of battery cells accommodated in the internal space of the module case into a plurality of cell groups each including at least one battery cell and provide independent gas venting passage to each cell group, it is possible to control gases generated from the battery cells to be vented in an intended direction and, if thermal runaway occurs in any one of the plurality of cell groups, delay the heat transfer time to other cell groups and prevent chain thermal runaway or ignition of other cell groups or other battery modules.

In addition, since a first venting structure included in the venting structure is coupled to the module case and configured to cover the opening of the module case and divide the plurality of battery cells into a plurality of cell groups, and since a second venting structure included in the venting structure is coupled to the first venting structure and configured to form a plurality of gas venting passages respectively corresponding to the plurality of cell groups, it is possible to simplify the manufacturing process of battery modules, which have independent gas venting passages for each cell group, and reduce the manufacturing time and manufacturing costs of battery modules.

In addition, each of the plurality of gas venting passages is configured to provide a gas movement path in a zigzag or meander shape, so that heat energy of high-temperature gas or flame moving through the gas venting passage can be appropriately dispersed and the flame can be prevented from being discharged outside the battery module.

Furthermore, it goes without saying that the embodiments according to the present disclosure are able to solve various technical problems other than those mentioned in this specification in the relevant technical field as well as related technical fields.

## Claims

1. A battery module (100) equipped with a plurality of battery cells, the battery module (100) comprising:
a module case (120) having an internal space and an opening leading to the internal space, and configured to accommodate the plurality of battery cells in the internal space; and
a venting structure (130, 140) configured to divide the plurality of battery cells accommodated in the internal space into a plurality of cell groups each comprising at least one battery cell and provide an independent gas venting passage to each cell group,
wherein the venting structure (130, 140) comprises:
a first venting structure (130) configured to cover the opening of the module case (120) and divide the plurality of battery cells into the plurality of cell groups; and
a second venting structure (140) configured to be coupled to the first venting structure (130) so as to form a plurality of gas venting passages corresponding to the plurality of cell groups,
wherein the first venting structure (130) comprises:
a first plate (132) configured to cover the opening; and
at least one blocking wall (134) configured to extend from a first surface of the first plate adjacent (132) to the internal space toward the internal space, divide the plurality of battery cells into the plurality of cell groups, and block gas movement between the cell groups,
wherein the first plate (132) has a plurality of gas inlets (132a) corresponding to the plurality of cell groups, and
wherein each of the plurality of gas inlets (132a) is provided at a position adjacent to a corresponding cell group among the plurality of cell groups so as to lead to one gas venting passage among the plurality of gas venting passages,
**characterized in that** the module case (120) has at least one guide groove (128a) configured such that an edge portion of the at least one blocking wall (134) is inserted into and guided by the same.

2. The battery module (100) according to claim 1,
wherein each of the plurality of gas venting passages is configured to provide a gas movement path in a zigzag or meander shape.

3. The battery module (100) according to claim 1,
wherein the first venting structure (130) further comprises
a partition structure (136) configured to protrude from a second surface of the first plate (132) and come into close contact with the second venting structure (140) so as to form the plurality of gas venting passages.

4. The battery module (100) according to claim 3,
wherein the second venting structure (140) has an insertion groove (148) configured such that at least a portion of the partition structure (136) is inserted into and comes into close contact with the same.

5. The battery module (100) according to claim 1,
wherein the second venting structure (140) has a plurality of gas outlets (144) corresponding to the plurality of gas venting passages.

6. The battery module (100) according to claim 1,
wherein the second venting structure (140') comprises:
a second plate (142') facing a second surface of the first plate (132); and
a partition structure (148') configured to protrude from the second plate (142') and come into close contact with the second surface of the first plate (132) so as to form the plurality of gas venting passages.

7. The battery module (100) according to claim 6,
wherein the second plate (142') and the partition structure (148') are integrally formed.

8. A battery pack (10) comprising the battery module (100) according to any one of claims 1 to 7.

9. A vehicle (2) comprising the battery module (100) according to any one of claims 1 to 7.

## Patentansprüche

1. Batteriemodul (100), das mit einer Vielzahl von Batteriezellen ausgestattet ist, wobei das Batteriemodul (100) Folgendes umfasst:
ein Modulgehäuse (120), das einen Innenraum und eine in den Innenraum führende Öffnung aufweist und so konfiguriert ist, dass es die Vielzahl von Batteriezellen im Innenraum aufnimmt; und
eine Entlüftungsstruktur (130, 140), die so konfiguriert ist, dass sie die in dem Innenraum aufgenommene Vielzahl von Batteriezellen in eine Vielzahl von Zellengruppen unterteilt, die jeweils mindestens eine Batteriezelle umfassen, und für jede Zellengruppe einen unabhängigen Gasentlüftungskanal bereitstellt,
wobei die Entlüftungsstruktur (130, 140) Folgendes umfasst:
eine erste Entlüftungsstruktur (130), die so konfiguriert ist, dass sie die Öffnung des Modulgehäuses (120) abdeckt und die Vielzahl von Batteriezellen in die Vielzahl von Zellengruppen unterteilt; und
eine zweite Entlüftungsstruktur (140), die so konfiguriert ist, dass sie mit der ersten Entlüftungsstruktur (130) gekoppelt wird, um eine Vielzahl von Gasentlüftungskanälen entsprechend der Vielzahl von Zellengruppen zu bilden,
wobei die erste Entlüftungsstruktur (130) Folgendes umfasst:
eine erste Platte (132), die so konfiguriert ist, dass sie die Öffnung abdeckt; und
mindestens eine Sperrwand (134), die so konfiguriert ist, dass sie sich von einer ersten Oberfläche der ersten Platte benachbart (132) zum Innenraum in Richtung des Innenraums erstreckt, die Vielzahl von Batteriezellen in die Vielzahl von Zellengruppen unterteilt und eine Gasbewegung zwischen den Zellengruppen blockiert,
wobei die erste Platte (132) eine Vielzahl von Gaseinlässen (132a) entsprechend der Vielzahl von Zellengruppen aufweist, und
wobei jeder der Vielzahl von Gaseinlässen (132a) an einer Position benachbart zu einer entsprechenden Zellengruppe aus der Vielzahl von Zellengruppen vorgesehen ist, so dass er zu einem Gasentlüftungskanal aus der Vielzahl von Gasentlüftungskanälen führt,
**dadurch gekennzeichnet, dass** das Modulgehäuse (120) mindestens eine Führungsnut (128a) aufweist, die so konfiguriert ist, dass ein Randabschnitt der mindestens einen Sperrwand (134) in diese eingesetzt und durch diese geführt wird.

2. Batteriemodul (100) nach Anspruch 1,
wobei jeder der Vielzahl von Gasentlüftungskanälen so konfiguriert ist, dass er einen Gasbewegungspfad in einer Zickzack- oder Mäanderform bereitstellt.

3. Batteriemodul (100) nach Anspruch 1,
wobei die erste Entlüftungsstruktur (130) ferner Folgendes umfasst:
eine Trennstruktur (136), die so konfiguriert ist, dass sie von einer zweiten Oberfläche der ersten Platte (132) vorsteht und in engen Kontakt mit der zweiten Entlüftungsstruktur (140) kommt, um die Vielzahl von Gasentlüftungskanälen zu bilden.

4. Batteriemodul (100) nach Anspruch 3,
wobei die zweite Entlüftungsstruktur (140) eine Einführnut (148) aufweist, die so konfiguriert ist, dass mindestens ein Abschnitt der Trennstruktur (136) in diese eingesetzt wird und in engen Kontakt mit dieser kommt.

5. Batteriemodul (100) nach Anspruch 1,
wobei die zweite Entlüftungsstruktur (140) eine Vielzahl von Gasauslässen (144) entsprechend der Vielzahl von Gasentlüftungskanälen aufweist.

6. Batteriemodul (100) nach Anspruch 1,
wobei die zweite Entlüftungsstruktur (140') Folgendes umfasst:
eine zweite Platte (142'), die einer zweiten Oberfläche der ersten Platte (132) zugewandt ist; und
eine Trennstruktur (148'), die so konfiguriert ist, dass sie von der zweiten Platte (142') vorsteht und in engen Kontakt mit der zweiten Oberfläche der ersten Platte (132) kommt, um die Vielzahl von Gasentlüftungskanälen zu bilden.

7. Batteriemodul (100) nach Anspruch 6,
wobei die zweite Platte (142') und die Trennstruktur (148') einstückig ausgebildet sind.

8. Batteriepack (10), umfassend das Batteriemodul (100) nach einem der Ansprüche 1 bis 7.

9. Fahrzeug (2), umfassend das Batteriemodul (100) nach einem der Ansprüche 1 bis 7.

## Revendications

1. Module de batterie (100) équipé d'une pluralité d'éléments de batterie, le module de batterie (100) comprenant :
un boîtier de module (120) ayant un espace interne et une ouverture menant à l'espace interne, et configuré pour loger la pluralité d'éléments de batterie dans l'espace interne ; et
une structure d'évent (130, 140) configurée pour diviser la pluralité d'éléments de batterie logés dans l'espace interne en une pluralité de groupes d'éléments comprenant chacun au moins un élément de batterie et fournir un passage d'échappement de gaz indépendant à chaque groupe d'éléments,
dans lequel la structure d'évent (130, 140) comprend :
une première structure d'évent (130) configurée pour recouvrir l'ouverture du boîtier de module (120) et diviser la pluralité d'éléments de batterie en la pluralité de groupes d'éléments ; et
une seconde structure d'évent (140) configurée pour être couplée à la première structure d'évent (130) de manière à former une pluralité de passages d'échappement de gaz correspondant à la pluralité de groupes d'éléments,
dans lequel la première structure d'évent (130) comprend :
une première plaque (132) configurée pour recouvrir l'ouverture ; et
au moins une paroi de blocage (134) configurée pour s'étendre depuis une première surface de la première plaque adjacente (132) à l'espace interne vers l'espace interne, diviser la pluralité d'éléments de batterie en la pluralité de groupes d'éléments, et bloquer le mouvement de gaz entre les groupes d'éléments,
dans lequel la première plaque (132) présente une pluralité d'entrées de gaz (132a) correspondant à la pluralité de groupes d'éléments, et
dans lequel chacune de la pluralité d'entrées de gaz (132a) est prévue à une position adjacente à un groupe d'éléments correspondant parmi la pluralité de groupes d'éléments de manière à mener à un passage d'échappement de gaz parmi la pluralité de passages d'échappement de gaz,
**caractérisé en ce que** le boîtier de module (120) présente au moins une rainure de guidage (128a) configurée de sorte qu'une partie de bord de l'au moins une paroi de blocage (134) soit insérée dans celle-ci et guidée par celle-ci.

2. Module de batterie (100) selon la revendication 1,
dans lequel chacun de la pluralité de passages d'échappement de gaz est configuré pour fournir un trajet de mouvement de gaz de forme sinueuse ou en zigzag.

3. Module de batterie (100) selon la revendication 1,
dans lequel la première structure d'évent (130) comprend en outre
une structure de séparation (136) configurée pour faire saillie depuis une seconde surface de la première plaque (132) et venir en contact étroit avec la seconde structure d'évent (140) de manière à former la pluralité de passages d'échappement de gaz.

4. Module de batterie (100) selon la revendication 3,
dans lequel la seconde structure d'évent (140) présente une rainure d'insertion (148) configurée de sorte qu'au moins une partie de la structure de séparation (136) soit insérée dans celle-ci et vienne en contact étroit avec celle-ci.

5. Module de batterie (100) selon la revendication 1,
dans lequel la seconde structure d'évent (140) présente une pluralité de sorties de gaz (144) correspondant à la pluralité de passages d'échappement de gaz.

6. Module de batterie (100) selon la revendication 1,
dans lequel la seconde structure d'évent (140') comprend :
une seconde plaque (142') faisant face à une seconde surface de la première plaque (132) ; et
une structure de séparation (148') configurée pour faire saillie depuis la seconde plaque (142') et venir en contact étroit avec la seconde surface de la première plaque (132) de manière à former la pluralité de passages d'échappement de gaz.

7. Module de batterie (100) selon la revendication 6,
dans lequel la seconde plaque (142') et la structure de séparation (148') sont formées d'un seul tenant.

8. Bloc-batterie (10) comprenant le module de batterie (100) selon l'une quelconque des revendications 1 à 7.

9. Véhicule (2) comprenant le module de batterie (100) selon l'une quelconque des revendications 1 à 7.
